# EUROPEAN PATENT APPLICATION

(11) **EP 2 418 592 A1**
(43) Date of publication of application: **15.02.2012**
(21) Application number: 11006440.9
(22) Date of filing: 04.08.2011
(51) Int. Cl.: G06F 17/30

(54) **A shareable content container**

(30) Priority: 15.08.2010 US 856655
(71) Applicant: SAP Portals Israel Ltd., Ra'anana 43665 (IL)
(72) Inventor: Vainer, Vitaly, 63190 Walldorf (DE); Bavly, Guy Yosef, 63190 Walldorf (DE)
(74) Representative: Müller-Boré & Partner Patentanwälte

(57) **Abstract**

A content container comprising content components operable to display a dynamic content based on data received from a data source may be shared by generating a shareable content container comprising shareable content components. The shareable content components may utilize a static copy of data instead of accessing the data source. In some cases, the shareable content components may determine accessibility to the data source. The data may be retrieved in case the data source is accessible, and the static copy may be used in case the data source is not accessible.

## Description

### TECHNICAL FIELD

The present disclosure relates to sharing of content containers in general, and to methods of creating shareable content containers to various users having different accessibility to the content of the content containers, in particular.

### BACKGROUND

Content containers, also referred to as containers, are a common manner to view dynamic content by users. A user's access to the content may be restricted, based on network accessibility, security permissions, and the like. As such, while sharing a container with a user is possible, in some cases, the user may not be able to view the dynamic content properly due to access restriction.

### SUMMARY

One exemplary embodiment of the disclosed subject matter is a computer-implemented method for sharing a content container, the method comprising: obtaining the content container from a first storage device, the content container comprising a content component operative to display a dynamic content, the content component is configured to receive data from a data source in order to display the dynamic content; creating a static copy of the dynamic content; generating a shareable content component associated with the content component, the shareable content component is operative to display the dynamic content based on the static copy of the dynamic content; generating a shareable content container based on the content container, the shareable content container comprising the shareable content component; storing the shareable content container in a second storage device; and sharing the shareable content container with the user; and whereby a state of the second storage device is modified to include the shareable content container.

Another exemplary embodiment of the disclosed subject matter is a computerized apparatus for sharing a content container, the computerized apparatus having a processor, the computerized apparatus comprising: a content container obtaining module configured to obtain the content container from a first storage device, the content container comprising a content component operative to display a dynamic content, the content component is configured to receive data from a data source in order to display the dynamic content; a snapshot module configured to create a static copy of the dynamic content; a sharing module configured to generate a shareable content container accessible by a user, the sharing module comprising: a shareable content component determinator configured to generate a shareable content component associated with the content component, the shareable content component is operative to display the dynamic content based on the static copy of the dynamic content; a shareable content container determinator configured to generate the shareable content container based on the content container, the shareable content container comprising the shareable content component; and an access determinator configured to share the shareable content container with the user.

Yet another exemplary embodiment of the disclosed subject matter is a computer program product for sharing a content container, the computer program product comprising a computer-readable medium comprising a set of instructions for a general purpose computer, the set of instructions are operative to: obtain the content container from a first storage device, the content container comprising a content component operative to display a dynamic content, the content component is configured to receive data from a data source in order to display the dynamic content; create a static copy of the dynamic content; generate a shareable content component associated with the content component, the shareable content component is operative to display the dynamic content based on the static copy of the dynamic content; generate a shareable content container based on the content container, the shareable content container comprising the shareable content component; store the shareable content container in a second storage device; and share the shareable content container with the user.

### BRIEF DESCRIPTION OF THE DRAWINGS

Exemplary non-limited embodiments of the disclosed subject matter will be described, with reference to the following description of the embodiments, in conjunction with the figures. The figures are generally not shown to scale and any sizes are only meant to be exemplary and not necessarily limiting. Corresponding or like elements are designated by the same numerals or letters.
Fig. 1 is a schematic illustration of a computerized system, in accordance with some exemplary embodiments of the disclosed subject matter;
Fig. 2 is a schematic illustration of a shareable content container, in accordance with some exemplary embodiments of the disclosed subject matter;
Fig. 3 is a schematic illustration of a content container sharing apparatus, in accordance with some exemplary embodiments of the disclosed subject matter;
Fig. 4 is a flowchart of a method for sharing a content container, in accordance with some exemplary embodiments of the disclosed subject matter;
Fig. 5 is a flowchart of a method for using the shared content container, in accordance with some exemplary embodiments of the disclosed subject matter;
Fig. 6 is a flowchart of a method for repetitively sharing a content container, in accordance with some exemplary embodiments of the disclosed subject matter.

### DETAILED DESCRIPTION

The present description relates to content containers. A content container may be a web page, a page in an Enterprise Resource Planning (ERP) system or the like. The content container may comprise of widgets, gadgets, Really Simple Syndication (RSS) reader, UI element or another similar content component. The content component, also referred to as a component, may be embedded in the container and may be configured to display dynamic data.

In some cases, two or more components are embedded in the container and are configured to interact. In some cases, an event issued by a first component may initiate a functionality of a second component.

Content containers may be viewable to a user using a computer program, such as a web browser, an ERP application or the like. The computer program may display graphical elements of the content container based on meta data of the content container. Components of the container may be displayed in predetermined locations and provide for presentation of data that may be received on-line. The computer program may enable interaction of a user, such as using a keyboard, a pointing device or another Man-Machine Interface (MMI).

One technical problem dealt with by the disclosed subject matter is to enable sharing of a content container with a user, where the user may be restricted of access to data sources utilized by the content container. Another technical problem dealt with by the disclosed subject matter is to enable sharing the content container with a plurality of users, each having different access permissions to the data sources. Yet another technical problem dealt with by the disclosed subject matter is to provide for monitoring of sharing of content components.

One technical solution is to provide a snapshot of a content component of the content container. The snapshot may be taken by a first user having access to the data source, and utilized by a second user not having full access to the data source (e.g., not having a network access, not having permission to access and the like). Another technical solution is to generate a shareable content container comprising one or more shareable content components, each shareable content component operative to utilize either the snapshot, also referred to as a static copy, or the data source, depending on accessibility of a pertinent data source. Yet another technical solution is to record performing a share action to provide for an auditing capability. The recorded information may comprise indications of the shared content, as the users with which the shared content is shared may not have access to information presented in the content were it not for the share action.

One technical effect of utilizing the disclosed subject matter is providing a single shareable content container useful for a plurality of users. The single shareable content container may be utilized in a different manner by different users, depending on their respective access permissions to the data sources. Another technical effect of utilizing the disclosed subject matter is to enable a user to selectively bypass access permissions by determining to share a content with an unauthorized user. Yet another technical effect of utilizing the disclosed subject matter is maintaining, in some cases, an interaction between a first component and a second component. The interaction may be defined based on an event issued by the first component and received by the second component. The disclosed subject matter may provide to maintain the interaction when the first component and/or the second component utilize a static copy instead of data received from the data source.

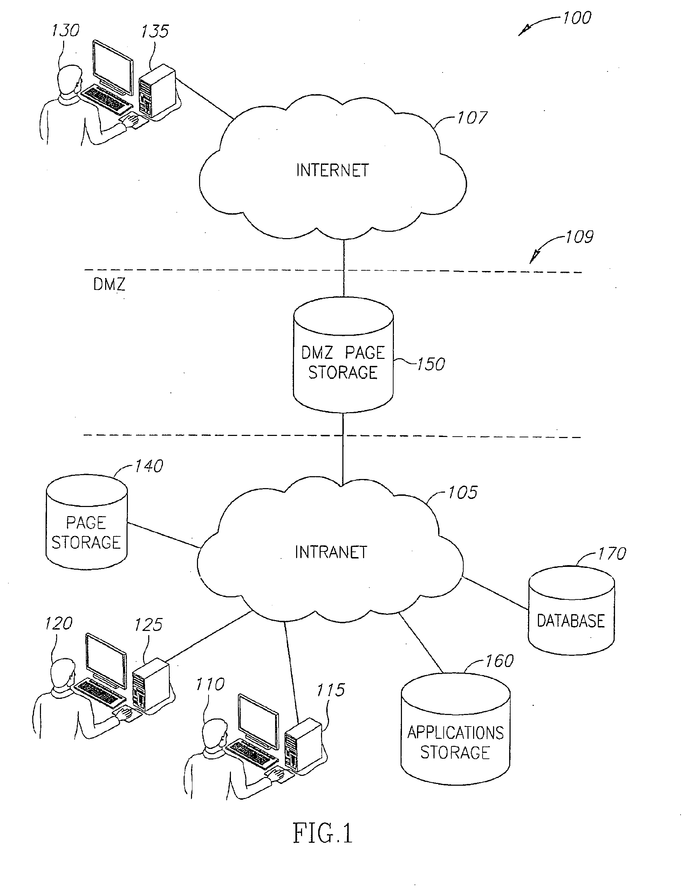

Referring now to Figure 1 showing a schematic illustration of a computerized system, in accordance with some exemplary embodiments of the disclosed subject matter. A computerized system 100 may comprise an intranet 105 or a similar communication network. The intranet 105 may be for example a Local Area Network (LAN), a Wide Area Network (WAN), a wireless network, such as a cellular network and a WiFi network, or the like.

In some exemplary embodiments, a page storage 140 may be connected to the intranet 105. The page storage 140 may be a storage server, a storage system or the like, capable of retaining one or more content containers, also referred to as pages.

In some exemplary embodiments, a first user 110 may utilize a terminal 115 or similar MMI to view a page. The page may be retrieved from the page storage 140. The page may comprise one or more content components. A content component may require to retrieve data from a remote location, such as data from a database 170 connected to the intranet 105, and such as application data from an applications storage 160 connected to the intranet 105. It will be noted that the applications storage 160 may store a computer program product, such as a Dynamic Link Library (DLL); a Dynamic HTML (DHTML) component, an applet, such as a Java applet or a Flash program; a script, such as a JavaScript, a PHP script, an Active Server Page (ASP); or the like useful for the operation of the component. In some exemplary embodiments, the page may be defined, designed, modified or the like by a user of the computerized system 100 such as the first user 110.

In some exemplary embodiments, the first user 110 may decide to share the page with a second user 120. The second user 120 may utilize a terminal 125 connectable to the intranet 105. A shareable page may be generated and stored in a storage device accessible to the second user 120, such as the page storage 140. In some exemplary embodiments, the second user 120 may be granted permission to access the shareable page. In some exemplary embodiments, the shareable page may comprise a static copy of the data utilized by the component, such as program code, a data set or the like, also referred to as a snapshot. The snapshot may be utilized by a computer of the second user 120 when displaying the shareable page.

In some exemplary embodiments, the first user 110 may decide to share the page with a third user 130. The third user 130 may utilize a terminal 135 to access a computerized network, such as the Internet 107. The intranet 105 and the internet 107 may be connected. A Demilitarized Zone (DMZ) 109 that is accessible via both the internet 107 and the intranet 105 may comprise storage devices, such as a DMZ page storage 150. The third user 130 may not have access via the internet 107 to the page storage 140, the applications storage 160 and/or the database 170. The third user 130 may have access via the internet 107 to the DMZ page storage 150. In response to a determination by the user 110 to share the page with the third user 130, the shareable page may be stored in the DMZ page storage 150.

In some exemplary embodiments, the third user 130 may be the second user 120 accessing the computerized system 100 from a remote location, such as from his home, from a mobile device or the like. In some exemplary embodiments, the second user 120 and the third user 130 may be different users, such as for example a customer and a colleague of the first user 110.

In some exemplary embodiments, each user of the system 100 may be associated with security permissions, such as preventing/allowing access to portions of the system. Accessibility of a user to a device, such as 140, 150, 160, 170, a portion thereof or the like, may be determined based on having a connection to the device, being connected in a location that is granted access to the device (e.g., connected via the intranet 105 in case accessing device not in the DMZ 109), having permission to access the device (or portion thereof) and the like. Accessibility of a user may change over time, such as by changing location of the user, by changing security permissions, or the like.

It will be noted that although the computerized system 100 shows only three users, there may be any plurality number of users. Some of the users may be connected via the internet 107, some of the users may be connected via the intranet 105, some of the users may be tentatively connected using either or both the internet 105 and the intranet 107, some of the users may be connected using a third computerized network or the like.

In some exemplary embodiments, a set of pages may be comprised by a single logical entity, such as a workspace. The disclosed subject matter may be useful for sharing a single page, a set of pages, a workspace or the like with one or more users.

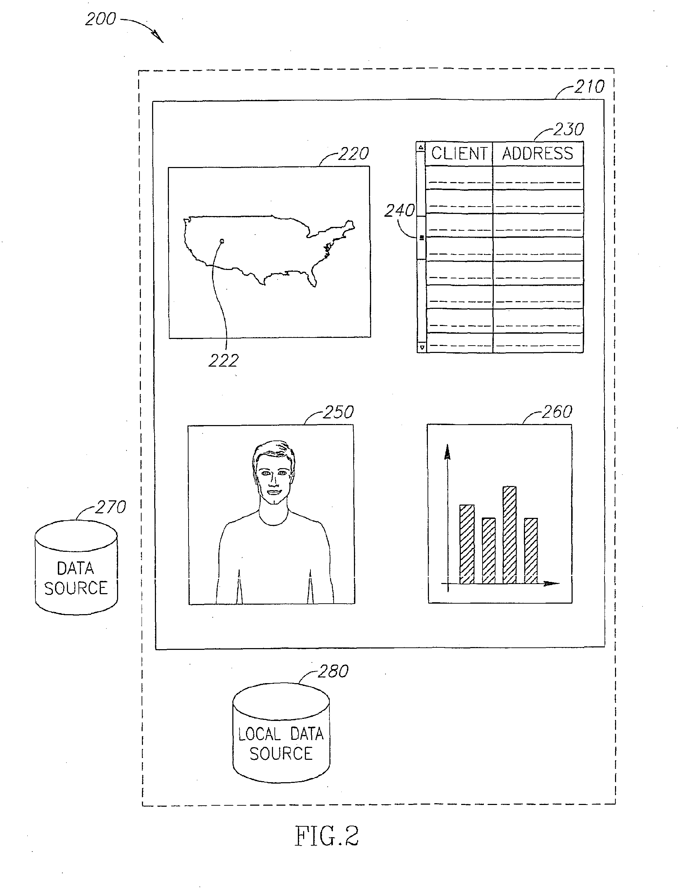

Referring now to Figure 2 showing a schematic illustration of a shareable content container, in accordance with some exemplary embodiments of the disclosed subject matter. A shareable container 200, also referred to as a shareable page, may comprise information useful for presenting a display 210. The display 210 may comprise displays of content components 220, 230, 250, 260.

In some exemplary embodiments, the display 210 is a graphical representation of the shareable page. The display 210 may comprise graphical representations of the components. The location of the graphical representations of the components may be determined based on meta-data (not shown).

In the exemplary display 210, a first component 210 is an interactive map. A user may interact with the map, such as by modifying the scale of the map, changing the location, rotating the map or the like.

A second component 230 may be an interactive list of clients and some respective data, such as addresses. The user may select a client from the list. As the display may be limited, a scrollbar 240 may be used to display a portion of the list.

A third component 250 may be a box presenting an image.

A fourth component 260 may be a chart.

In some exemplary embodiments, some components may interact with each other. For example, in response the a selection of a client in the list of the second component 240, a location 222 may be selected in the map of the first component 250, a pertinent chart may be displayed in the fourth component 260, an image of the customer's representative may be displayed in the third component 250 or the like.

The components of the shareable page 210 may utilize either a data source 270 or a local data source 280 to retrieve data useful for presenting their respective contents. For example, the applet utilizes in the first component 210 may be retrieved from the data source 270, such as for example the applications storage 160. As another example, the data used in the list of the second component 230 may be retrieved from the data source, such as for example the database 170. In some exemplary embodiments, in case the data source is not accessible by a computer presenting the display 210 (e.g., terminal 135 of Figure 1), the local data source 280 may be utilized instead. The local data source 280 may comprise snapshots of the data associated with the components 220, 230, 250, 260.

In some exemplary embodiments, the first component 220 may retrieve data from the data source 270, while another component, such as the second component 230 may retrieve data from the local data source 280. For example, in case the first component 220 is a publicly available widget, such as a Google™ maps widget the respective data source 270 may be accessible from the Internet. On the other hand, in case the second component 230 is a widget that utilizes privately stored data (as may be the case with client information) the widget may not be accessible from the Internet.

In some exemplary embodiments, the snapshot of the data may be a snapshot of a dataset utilized by a component. For example, the snapshot may be the dataset retrieved when the page is displayed and the shareable page is created. A first portion of the dataset may be displayed when the page is shared. A second portion of the dataset may not be displayed when the page is shared, but it may still have been retrieved and therefore copied and stored in the local data source 280. For example, consider the image of the third component 250. The image may change in respect to a selected customer, but at any one point only one image is displayed. In some exemplary embodiments, the dataset may still comprise all the images.

In some exemplary embodiments, the snapshot of the data may be a different representation of the data. For example, the list of the second component 230 may be modified into an HTML list. The content of the HTML list may be determined once the component is shared.

In some exemplary embodiments, the snapshot of the data may be an image of the display of the component. For example, a bitmap image of the display of the fourth component 260 may be taken. A bitmap image, however, may not include all the data available in the display. For example, consider the second component 230. As only a portion of the list is displayed based on the scrollbar 240, only that portion may be copied.

In some exemplary embodiments, a type of snapshot may depend on the component. A naïve snapshot which only creates an image of the display of the component may be avoided in case an advanced snapshot can be created. The component may be configured to allow creation and utilization of a dataset. The component may be inspected by a computer to generate a replica providing a different representation (e.g. HTML representation) when available.

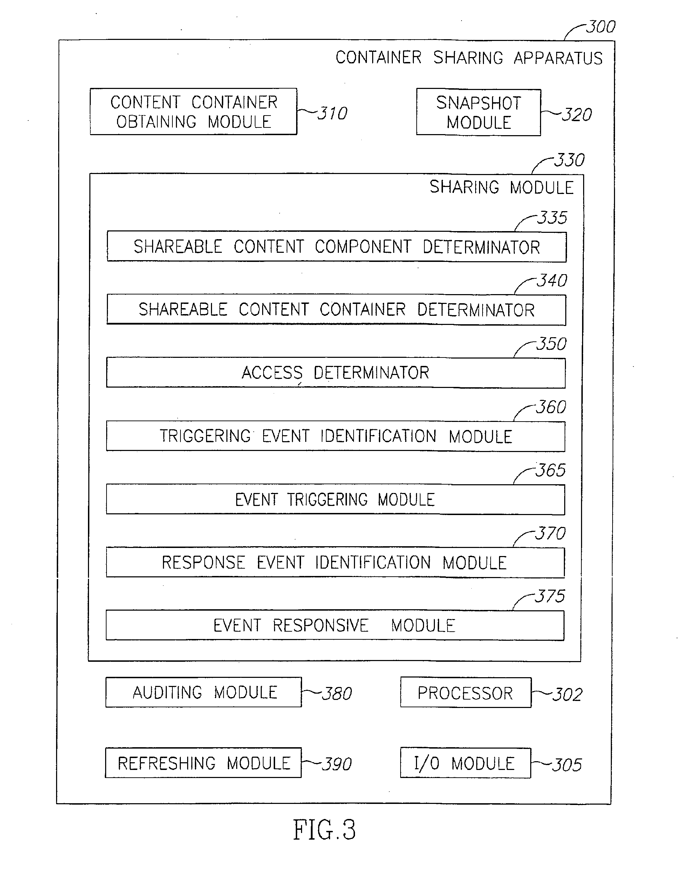

Referring now to Figure 3 is a schematic illustration of a content container sharing apparatus, in accordance with some exemplary embodiments of the disclosed subject matter. A container sharing apparatus 300 is configured to share a content container (i.e., a page) with a user, such as users 120 and 130 of Figure 1. A sharing user, such as 110 of Figure 1, may initiate the container sharing apparatus 300 to share the page with the user.

The container sharing apparatus 300 may comprise a content container obtaining module 310. The content container obtaining module 310 may be configured to obtain or otherwise receive a content container to be shared. The content container may be received from a page storage device, such as for example140 and/or 150 of Figure 1. The page may be executed to be displayed by a computerized device, such as for example the container sharing apparatus 300 and/or 115 of Figure 1.

A snapshot module 320 may be configured to create a snapshot of a dynamic content provided by a content component of the container. The snapshot is a static copy of the dynamic content.

In some exemplary embodiments, a naïve snapshot may be created. The naïve snapshot may be an image of a display. The display may be a graphical representation of the content component in case it is being executed and displayed. For example, the current representation of the first content component 220 of Figure 2. The display may be modified in the future. The image, may, however, stay as it was before.

In some exemplary embodiments, the content component may be adapted to provide and utilize an advanced snapshot. The advanced snapshot may be a copy of a dataset of a data source accessible by the content component. The content component may be adapted to utilize the copy of the dataset instead of accessing a data source and retrieving an up-to-date copy of the dataset. The content component may be adapted to export a dataset retrieved from the data source in order to be copied as the snapshot.

In some exemplary embodiments, the snapshot may be a combination between a naïve snapshot and an advanced snapshot. The snapshot may be, for example, a replica of the dynamic content. For example, the content component may be parsed or otherwise inspected to determine internal modules of the component, such as lists, radio buttons, toggle buttons and the like. The replica may be generated using a descriptive language such as, for example, HTML, to include the internal modules. Therefore, a dynamic content of a list, button or other internal module may be statically copied. Referring to the second component 230 of Figure 2, a naive snapshot may capture only a portion of the data as only a portion of the data is being displayed (e.g., a portion selected using the scrollbar 240). In case the second component 230 does not support a generation of an advanced snapshot as described above, a replica may be generated to capture all the data depicted in the second component 230 and not just the portion being currently displayed.

In some exemplary embodiments, the snapshot module 320 may be configured to initiate retrieval of a dataset from a pertinent data source and copy the dataset. The snapshot module 320 may therefore provide for a full static copy of the dynamic content, as is available at the time the snapshot module 320 is operated. In some exemplary embodiments, a static copy of only a portion of the dynamic content may be stored.

A sharing module 330 may be configured to generate a shareable content container such that the user may access the shareable content container. The shareable content container may be configured to provide a functionality substantially similar to that of the shared content container. The shareable content container may be configured to utilize the snapshot generated by the snapshot module 320 to provide a visual representation of the shareable content container.

A shareable content component determinator 335 may be configured to generate a shareable content component. The shareable content component may be based on the content component of the page being shared, such as having similar dimensions, triggering events, being responsive to events and other properties. In some exemplary embodiments, the shareable content component is operative to utilize a snapshot of the content component. The shareable content component may be operative to determine accessibility of a data source, such as 270 of Figure 2, utilized by the content component. In response to a determination that the data source is accessible, the shareable content component may utilize the data source to display content, in a similar manner to that performed by the content component. In some cases, the data source may be used to retrieve the content component itself and the content component may be executed, in a similar manner to that performed when displaying the content container. In response to a determination that the data source is not accessible, the shareable content component may utilize the snapshot to provide a visual representation instead of using the data source. The shareable content component may be configured to retrieve the snapshot from a local data source, such as 280 of Figure 2, which may be stored with the shareable content container.

A shareable content container determinator 340 may be configured to generated the shareable content container. The shareable content container may be generated based on the content container. For example, the dimensions of the shareable content container may be determined based on those of the content container, the layout of components may be determined based on that of the content container, an interaction (also referred to as wiring) between components of the shareable content container may be defined based on the interaction between components of the content container.

In some exemplary embodiments, the shareable content container determinator 340 may be configured to initiate operation of the shareable content component determinator 335 in respect to one or more components of the content container. In some exemplary embodiments, a determination whether or not to generate a shareable content component based on a content component may be made based on characteristics of the content component, such as availability to users, access permissions and the like. For example, an external widget, such as for example a stock performance chart widget, a map widget, or the like, may be accessible via the Internet and therefore a determination may be made not to generate a respective shareable component. In some cases, a determination may be made in respect to the user with whom the content container is shared. For example, in case the user does not have access permission to the content component, a shareable content component may be generated. As another example, in case the user is an defined as a user accessing the content container from an external network (such as 107 of Figure 1) and the content component utilizes a data source that is accessible from the external network (e.g., within an accessible DMZ, such as 109 of Figure 1), the content component may be utilizes without generation of a shareable content component.

An access determinator 350 may be configured to share the shareable content container. Sharing may be performed by storing the shareable content container in a storage device (such as 150 and/or 140 of Figure 1) that is accessible to the user. Sharing may be performed by allowing access to the shareable content container, such as by adding access permissions to the user.

In some exemplary embodiments, a triggering event identification module 360 may be configured to determine an event that can be issued by the content component in response to an action. In some exemplary embodiments, the triggering event identification module 360 may inspect a program code of the content component, such as HTML, DHTML, JavaScript, Java or the like, and identify events that may be triggered. In some exemplary embodiments, the triggering event identification module 360 may utilize an Application Programming Interface (API) to identify which events may be triggered. An event triggering module 365 may modify the shareable content component to initiate the event, such as to provide a substantially similar functionality by the shareable content component. For example, referring to the second component 230 of Figure 2, a selection event that may be triggered by the second component 230 may be identified and an appropriate event may be issued by the shareable content component. In case of a replica of the second component 230, an HTML wrapper may be utilized to enable event triggering upon interaction with the replica.

In a similar manner, a response event identification module 370 may determine events that a component responds to, and an event responsive module 375 may modify the shareable component to be responsive to the event.

The modules 360, 365, 370, 375 may be identify a wiring defined in respect to the container and maintain the wiring in the shareable container. An exemplary wiring may be the following: in response to a selection of a client in the second component 230, an event may be issued, providing meta data, such as a location associated with the customer, and a map component, such as the first component 220, may perform a predetermined functionality, such as selecting the location, centering on the location, zooming in/out on the location and the like. The wiring may be maintained in the shareable content container as well by enabling the shareable component associated with the second component 230 to trigger the event and/or by enabling the shareable component associated with the first component 220 to be responsive the event.

In some exemplary embodiments, an auditing module 380 may be configured to generate a log event in response to sharing a container with a user. The log event may comprise information such as identification of the sharing user, identification of the user, a time in which the share was performed, a copy of the snapshot generated, an indication of the various data elements provided to the user, and the like. The log event may be utilized for auditing purposes, such as to determine suspicious activity of a user, to identify a security breach, to identify a possible information leak and the like.

In some exemplary embodiments, a refreshing module 390 may be configured to update the snapshot of a shareable content component periodically. The refreshing module 390 may be configured to generate a snapshot using the snapshot module 320 and update the pertinent shareable content container. The refreshing module 390 may be configured to operate repetitively. The refreshing module 390 may operate in predetermined times, or every predetermined timeframes, such as every day at 00:00, every 3 days. The refreshing module 390 may operate in response to the occurrence of a predetermined event, such a data element is updated in a database, or the like.

In some exemplary embodiments, the container sharing apparatus 300 may comprise a processor 302. The processor 302 may be a Central Processing Unit (CPU), a microprocessor, an electronic circuit, an Integrated Circuit (IC) or the like. The processor 302 may be utilized to perform computations required by the container sharing apparatus 300 or any of it subcomponents.

In some exemplary embodiments, an I/O module 305 may be configured to receive input from or provide output to a user, such as using peripheral devices or other forms of MMI. The I/O module 305 may further be configured to communicate over a computerized network, such as the Internet or an intranet, with other devices, such as storage devices, application servers, or the like. In some exemplary embodiments, the I/O module 305 may be utilized by the content container obtaining module 310 to receive the content container.

In some exemplary embodiments, only a portion of users of a computerized system may perform sharing in accordance with the disclose subject matter. In some exemplary embodiments, a permission to share property may be assigned to a user. The permission property may indicate whether the user is permitted to share a container. The sharing module 330 may further be configured to determine the permission property of the sharing user and to verify that the sharing user has permission to share the content container. In some exemplary embodiments, the permission may be different in respect to different containers, components, or the like.

In some exemplary embodiments, refreshing a shareable content container using the refreshing module 390 may require a permission to refresh, which may be indicated using a refreshing permission property. In some exemplary embodiments, the refreshing module 390 may verify permissions of the sharing user.

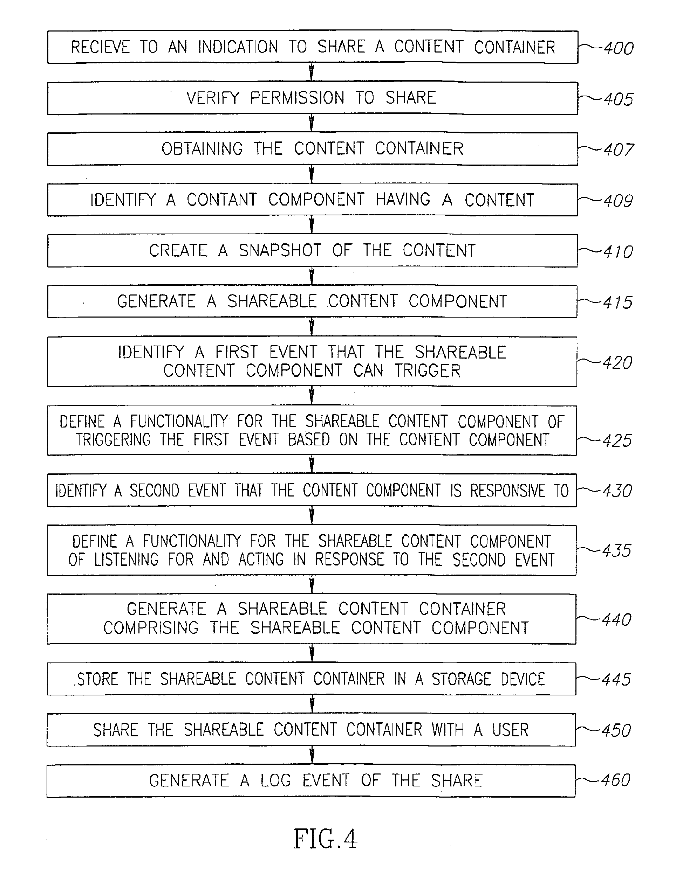

Referring now to Figure 4 showing a flowchart of a method for sharing a content container, in accordance with some exemplary embodiments of the disclosed subject matter. The method of Figure 4 may be a computer-implemented method. The method of Figure 4 may be performed in a computerized environment.

In step 400, an indication that a sharing user, such as 110 of Figure 1, would like to share a content container may be detected. The indication may initiate the method depicted in Figure 4. The indication to share may be received using an I/O module, such as 305 of Figure 3.

In step 405, permissions associated with the sharing user may be inspected to verify that the sharing user is allowed to share the content container. In some exemplary embodiments, the sharing user may not be allowed to share any container. In some exemplary embodiments, the sharing user may be generally allowed to share containers, but may not be allowed to share the container. In case the sharing user is permitted to share, the method may continue to step 407. Otherwise, the method may be terminated.

In some exemplary embodiments, in case the sharing user tries to share a content container without having appropriate permissions, an auditing module, such as 380 of Figure 3, may generate a log event.

In step 407, the content container may be obtained. The content container may be obtained by a content container obtaining module, such as 310 of Figure 3.

In step 409, a content component comprised by the content container may be detected. The content component may be associated with a visual representation of a content. The content component may be detected based upon meta-data of the content container.

In step 410, a static copy (i.e., snapshot) of the content may be created. The static copy may be a naïve snapshot, an advanced snapshot, a replica of the static copy, or the like. The static copy may be created by a snapshot module, such as 320 of Figure 3.

In step 415, a shareable content component may be generated. The shareable content component may be generated based on the content component. The shareable content component may comprise the static copy created in step 410. The shareable content component may be generated by a shareable content component determinator, such as 335 of Figure 3.

In steps 420 and 425, an event that the content component may trigger may be detected and a pertinent functionality may be defined for the shareable content component. The event may be detected by a triggering event identification module, such as 360 of Figure 3. The functionality may be defined by an event triggering module, such as 365 of Figure 3.

In step 430 and 435, an event that the content component is responsive to may be detected and a pertinent functionality may be defined for the shareable content component. The event may be detected by a responsive event identification module, such as 370 of Figure 3. The functionality may be defined by an event responsive module, such as 375 of Figure 3.

Steps 420-435 may be utilized to maintain in the shareable content container a wiring defined in respect to components of the content container.

In step 440, a shareable content container may be generated. The shareable content container may comprise one or more shareable content components generated in step 415. The shareable content container may further comprise a content component that is accessible to the user with whom the shareable content container is shared. The shareable content container may be generated by a shareable content container determinator, such as 340 of Figure 3.

In step 445, the shareable content container may be stored in a storage device, such as 150 or 140 of Figure 1.

In step 450, the shareable content container may be shared with a user. A sharing module, such as 330 of Figure 3, may perform the share. In some exemplary embodiments, the share may comprise sending to the user a link to the shareable content container, sending the shareable content container, or the like. In some exemplary embodiments, the share may comprise setting permissions allowing access by the user to the shareable content container.

In step 460, a log event of the share may be generated. In some exemplary embodiments, the log event may be generated by an auditing module, such as 380 of Figure 3.

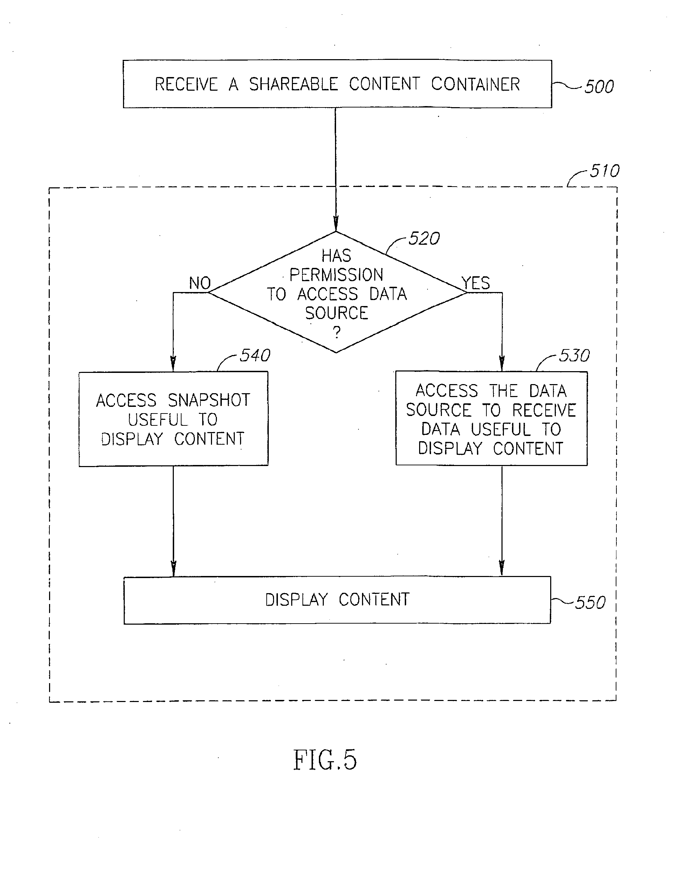

Referring now to Figure 5 showing a flowchart of a method for using the shared content container, in accordance with some exemplary embodiments of the disclosed subject matter.

In step 500, the shareable content container may be received. The shareable content container may be received by a computer utilized by the user. The content container may be received from a storage device accessible by the computer, such as 150 or 140 of Figure 1. The content container may be retrieved from a local repository, such as an email repository, a local hard disk, or the like.

In step 510, the shareable content container may be executed. A visual representation of the shareable content container may be determined and displayed by the computer. The shareable content container may comprise one or more shareable content components. For each shareable content component, a visual representation may be determined and displayed in accordance with the disclosed subject matter by performing steps 520-550. For the ease of explanation, the method of Figure 5 refers to a single shareable content component, although the disclosed subject matter is not limited to only a single shareable content component.

In step 520, a determination whether or not the computer is able to access a remote data source, such as 270 of Figure 2, utilized by the shareable content component, is determined. The ability of the computer to access may be limited due to network connectivity, a method of connection to the network (e.g., via a Virtual Private Network (VPN) or using an unsecured connection), access permissions associated with the user operating the computer, and the like.

In response to a determination that the data source is accessible, step 530 may be performed. In step 530, the data source may be accessed to determine the content to be displayed. The content of the shareable content component may be determined in a substantially similar manner to that of determining the content of the (original) content component.

In response to a determination that the data source is not accessible, step 540 may be performed. In step 540, a local data source, such as 280 of Figure 2, may be accessed, to provide a snapshot of the (original) content component. The snapshot may be utilized to determine the content.

In step 550, the content determined in either step 540 or 530 may be displayed.

In some exemplary embodiments, the shareable content container may comprise in addition one or more content components. The content of the one or more content components may be determined and displayed, as is normally performed in respect to the (original) content container.

In some exemplary embodiments, components of the shareable content container (such as for example shareable content components and/or (original) content components) may provide for an interaction using a predetermined wiring.

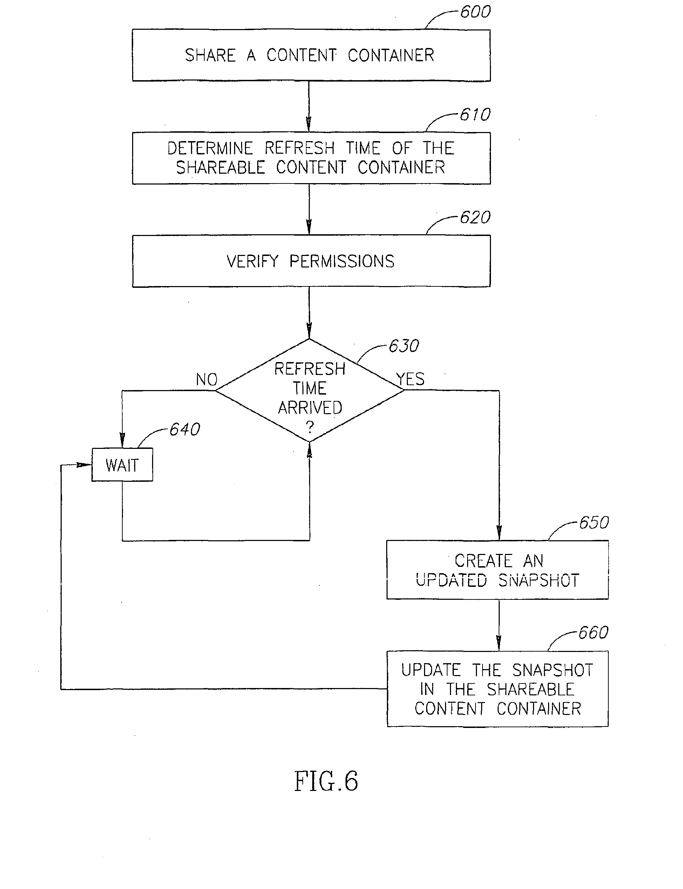

Referring now to Figure 6 showing a flowchart of a method for repetitively sharing a content container, in accordance with some exemplary embodiments of the disclosed subject matter.

In step 600, a content container may be shared by a sharing user. The sharing may be performed, for example, by a method similar to that depicted in Figure 4.

In step 610, a refresh time of the shareable content container may be determined. The refresh time may be a period of time (e.g., a day, a week) or a set of designated times (e.g., on a specific date at 06:00 and then two days later at 08:00 and then on the same day at 18:00) or the like.

In step 620, verification that the sharing user has permission to perform refreshing of the content of the shareable content container may be performed.

In step 630, a determination whether or not a refresh time arrived (or passed without performing the refresh) may be performed. In case the time has not arrived, step 640 may be performed to allow time to pass. In case the time has arrived, step 650 may be performed.

In step 650, an updated snapshot of a shareable content container comprised by the shareable content container may be determined. The snapshot may be generated by a snapshot module, such as 320 of Figure 3.

In step 660, the shareable content container may be modified to include the updated snapshot instead of a previous snapshot.

After step 660 is performed, step 640 may be performed to wait until the next time arrives to refresh the snapshot.

The disclosed subject matter may be implemented in a computer program embedded in a computer readable media and executed by a computer responsive to the computer program. The computer readable media may be a Compact Disc (CD), a local hard disk, a remote drive, a flash memory, a Random Access Memory (RAM) or the like. The computer may be adapted to read instructions from the computer readable media and to perform an operation based on the instructions.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation, material, step or component to the teachings without departing from the essential scope thereof. Therefore, it is intended that the disclosed subject matter not be limited to the particular embodiment disclosed as the best mode contemplated for carrying out this invention, but only by the claims that follow.

## Claims

1. A computer-implemented method for sharing a content container, the method comprising:
obtaining the content container from a first storage device, the content container comprising a content component operative to display a dynamic content, the content component is configured to receive data from a data source in order to display the dynamic content;
creating a static copy of the dynamic content;
generating a shareable content component associated with the content component, the shareable content component is operative to display the dynamic content based on the static copy of the dynamic content;
generating a shareable content container based on the content container, the shareable content container comprising the shareable content component;
storing the shareable content container in a second storage device; and
sharing the shareable content container with the user; and
whereby a state of the second storage device is modified to include the shareable content container.

2. The computer-implemented method of claim 1, wherein the shareable content component is operative to:
determine accessibility to the data source; and
display the dynamic content;
wherein the shareable content component is operative to display the dynamic content based on the data source, in response to having access to the data source; and
wherein the shareable content component is operative to display the dynamic content based on the static copy of the dynamic content in response to not having access to the data source.

3. The computer-implemented method of claim 1 or 2, wherein the content container comprises at least a first content component and a second content component; wherein said generating a shareable content component comprises generating a first shareable content component associated with the first content component and a second shareable content component associated with the second content component; and wherein the shareable content container comprises the first shareable content component and the second shareable content component.

4. The computer-implemented method of claim 3,
wherein the first content component is configured to produce an indication of an event;
wherein the second content component is responsive to the indication of the event; wherein the first shareable content component is configured to produce the indication of the event;
wherein the second shareable content component is responsive to the indication of the event; and optionally,
wherein the data received by the content component from the data source is selected from the group consisting of an instruction useful for determining an operation of the content component and a data set utilized as part of the dynamic content.

5. The computer-implemented method of any one of the preceding claims, wherein the first storage device and the second storage device are the same storage device.

6. The computer-implemented method of any one of the preceding claims, further comprising:
determining a sharing user, the sharing user initiating said sharing;
generating a log event, the log event comprising at least:
an identification of the sharing user;
a time associated with the sharing user initiating said sharing; and
an identification associated with the static copy;
the method optionally comprising:
verifying that the sharing user has security permission to generate the shareable content container.

7. The computer-implemented method of any one of the preceding claims, wherein said creating the static copy comprises at least one of the following:
generating a copy of a dataset of the data source, wherein the content component is configured to use portions of the dataset, wherein the shareable content component is operative to utilize the copy of the dataset instead of the data source in response to not having access to the data source;
generating an image of the display of the content component, wherein the shareable content component is configured to display the image; and
generating a replica of the content component, the replica is configured to perform a functionality of the content component.

8. The computer-implemented method of any one of the preceding claims, further comprising a first computer displaying the shareable content container, wherein said displaying comprises determining a first display of the shareable content component based on accessibility to the data source; and wherein the method optionally comprises:
a second computer having access to the shareable content container displaying the shareable content container, wherein said displaying comprises determining a second display of the shareable content component based on accessibility to the data source.

9. The computer-implemented method of claim 8, wherein the first computer accesses the data source to determine the first display; and wherein the second computer utilizes the static copy to determine the second display.

10. A computerized apparatus for sharing a content container, the computerized apparatus having a processor, the computerized apparatus comprising:
a content container obtaining module configured to obtain the content container from a first storage device, the content container comprising a content component operative to display a dynamic content, the content component is configured to receive data from a data source in order to display the dynamic content;
a snapshot module configured to create a static copy of the dynamic content;
a sharing module configured to generate a shareable content container accessible by a user, the sharing module comprising:
a shareable content component determinator configured to generate a shareable content component associated with the content component, the shareable content component is operative to display the dynamic content based on the static copy of the dynamic content;
a shareable content container determinator configured to generate the shareable content container based on the content container, the shareable content container comprising the shareable content component; and
an access determinator configured to share the shareable content container with the user.

11. The computerized apparatus of claim 10, wherein said access determinator is configured to share the shareable content component with a plurality of users.

12. The computerized apparatus of claim 10 or 11, wherein said sharing module further comprises:
a triggering event identification module configured to determine an event that can be issued by the content component in response to an action; and
an event triggering module configured to define the shareable content component to issue the event in response to the action.

13. The computerized apparatus of any one of claims 10 to 12, wherein said sharing module further comprises:
a responsive event identification module configured to determine an indication of an event, the content component is responsive to the event; and
an event responsive module configured to define the shareable content component to be responsive to the event.

14. The computerized apparatus of any one of claims 10 to 13, further comprising an auditing module, said auditing module is configured to generate a log event in response to operating said sharing module; and wherein the apparatus optionally comprises
a refreshing module configured to update the static copy of the dynamic content repetitively.

15. A computer program product for sharing a content container, said computer program product comprising a computer-readable medium comprising a set of instructions for a general purpose computer, the set of instructions are operative to perform operations according to the method of any one of claims 1 to 9.
